# DEMANDE DE BREVET EUROPEEN

(11) **EP 4 645 545 A1**
(43) Date de publication de la demande: **05.11.2025**
(21) Numéro de dépôt: 25171841.7
(22) Date de dépôt: 23.04.2025
(51) Int. Cl.: H01M 50/209, H01M 50/262, H01M 50/271, H01M 50/298, H01M 50/507, H01M 50/517

(54) **ENSEMBLE ÉLECTROCHIMIQUE COMPRENANT UN CAPOT DE MAINTIEN D ÉLÉMENTS ÉLECTROCHIMIQUES**

(30) Priorité: 23.04.2024 FR 2404188
(71) Demandeur: SAFT, 92300 Levallois-Perret (FR)
(72) Inventeur: POUYAU, Laurent, 33290 Blanquefort (FR); PELGE, Gregoire, 33000 Bordeaux (FR); PHILIPPE, Sebastien, 33127 Saint Jean D'illac (FR); DOS REIS, Christophe, 33290 Blanquefort (FR)
(74) Mandataire: Lavoix

(57) **Abrégé**

La présente invention concerne un ensemble électrochimique (10) comprenant :
- des éléments électrochimiques (14) ;
- des parois longitudinales (20, 22) agencées de part et d'autre des éléments électrochimiques (14) ;
- des parois transversales (30, 32) ;
- un capot (50) ;

les éléments électrochimiques (14) étant maintenus en position selon une direction longitudinale (X) par les parois longitudinales (20, 22) et selon une direction transversale (Y) par les parois transversales (30, 32),
le capot (50) étant réalisé en une seule pièce, bloquant le déplacement des éléments électrochimiques (14) selon une direction d'élévation (Z) dans un sens, et comprenant :
- une paroi principale (52) comprenant une surface interne (54) en contact direct avec les éléments électrochimique (14) et une surface externe (56) ; et
- des nervures (60) s'étendant depuis la surface externe (56).

## Description

La présente invention concerne un ensemble électrochimique comprenant :
- une pluralité d'éléments électrochimiques agencés les uns à la suite des autres selon une direction longitudinale ;
- une première et une deuxième parois longitudinales agencées de part et d'autre de la pluralité d'élément électrochimiques selon la direction longitudinale ;
- une première et une deuxième parois transversales, la première paroi transversale reliant un premier bord latéral de la première paroi longitudinale et un premier bord latéral de la deuxième paroi longitudinale, la deuxième paroi transversale reliant un deuxième bord latéral de la première paroi longitudinale et un deuxième bord latéral de la deuxième paroi longitudinale ;
- un capot ;
la pluralité d'éléments électrochimiques étant agencée dans un espace de réception délimité par les parois longitudinales, les parois transversales et le capot.

Un tel ensemble électrochimique comprend en outre des organes spécifiques destinés au maintien des éléments électrochimiques en position selon chacune des directions longitudinale, transversale et d'élévation.

En particulier, un tel ensemble électrochimique comprend des organes spécifiques destiné à empêcher le déplacement des éléments électrochimiques selon la direction d'élévation.

Cependant, l'utilisation de ces organes spécifiques complexifie l'ensemble électrochimique, augmente sa masse et rend plus difficile l'assemblage de l'ensemble.

Un but de l'invention est alors de proposer un ensemble électrochimique dans lequel le maintien des éléments électrochimiques en position est assuré tout en rendant l'ensemble électrochimique simple et plus léger.

A cet effet, l'invention a pour objet un ensemble électrochimique comprenant :
- une pluralité d'éléments électrochimiques agencés les uns à la suite des autres selon une direction longitudinale ;
- une première et une deuxième parois longitudinales s'étendant sensiblement perpendiculairement à la direction longitudinale et sensiblement parallèlement à un plan frontal médian défini par une direction transversale et une direction d'élévation perpendiculaires à la direction longitudinale, les première et deuxième parois longitudinales étant agencées de part et d'autre de la pluralité d'élément électrochimiques selon la direction longitudinale ;

- une première et une deuxième parois transversales s'étendant sensiblement parallèlement à un plan sagittal médian défini par la direction longitudinale et la direction d'élévation, la première paroi transversale reliant un premier bord latéral de la première paroi longitudinale et un premier bord latéral de la deuxième paroi longitudinale, la deuxième paroi transversale reliant un deuxième bord latéral de la première paroi longitudinale et un deuxième bord latéral de la deuxième paroi longitudinale ;
- un capot s'étendant sensiblement parallèlement à un plan horizontal défini par la direction longitudinale et la direction transversale ;
   la pluralité d'éléments électrochimiques étant maintenue en position selon la direction longitudinale par les première et deuxième parois longitudinales et selon la direction transversale par les première et deuxième parois transversales,
   le capot étant réalisé en une seule pièce et bloquant le déplacement de la pluralité d'éléments électrochimiques selon la direction d'élévation dans un sens,
   le capot comprenant :
      - une paroi principale s'étendant sensiblement parallèlement au plan horizontal, comprenant une surface interne en contact direct avec la pluralité d'éléments électrochimique et une surface externe opposée à la surface interne ; et
      - une pluralité de nervures s'étendant depuis la surface externe de la paroi principale, sensiblement parallèlement au plan sagittal médian.

Le fait que le capot soit réalisé en une seule pièce simplifie grandement l'ensemble électrochimique et rend plus aisé l'assemblage de l'ensemble électrochimique. En outre, le capot bloque le déplacement de la pluralité d'éléments électrochimiques selon la direction d'élévation dans un sens par contact direct entre la surface interne de la paroi principale du capot avec la pluralité d'éléments électrochimiques, ce qui permet d'éviter d'avoir recours à des organes spécifiques de maintien. Egalement, la pluralité de nervures du capot permet d'améliorer l'inertie sous flexion du capot lors d'une sollicitation du capot selon la direction d'élévation. Ainsi, le maintien de la pluralité d'éléments électrochimiques selon la direction d'élévation est amélioré.

Suivant d'autres aspects avantageux de l'invention, l'ensemble électrochimique comprend une ou plusieurs des caractéristiques suivantes, prises isolément ou suivant toutes les combinaisons techniquement possibles :
- le capot est monté sur les première et deuxième parois longitudinales ;
- le capot est vissé sur les première et deuxième parois longitudinales ;
- le capot comprend une première et une deuxième parois transversales externes s'étendant depuis la surface externe de la paroi principale du capot, la première paroi transversale externe du capot s'étendant dans le prolongement de la première paroi transversale de l'ensemble électrochimique, la deuxième paroi transversale externe du capot s'étendant dans le prolongement de la deuxième paroi transversale de l'ensemble électrochimique ;
- le capot comprend en outre une première paroi transversale interne s'étendant depuis la surface externe de la paroi principale du capot sensiblement parallèlement à la première paroi transversale externe du capot et une deuxième paroi transversale interne s'étendant depuis la surface externe de la paroi principale du capot sensiblement parallèlement à la deuxième paroi transversale externe du capot,
   la première paroi transversale externe et la première paroi transversale interne du capot délimitant un première espace de réception d'au moins une première barre d'interconnexion et/ou de premiers capteurs de l'ensemble électrochimique, la deuxième paroi transversale externe et la deuxième paroi transversale interne du capot délimitant un deuxième espace de réception d'au moins une deuxième barre d'interconnexion et/ou de deuxième capteurs de l'ensemble électrochimique ;
- les parois transversales externes du capot comprennent une pluralité d'ergots apte à maintenir la barre d'interconnexion correspondante et/ou les capteurs correspondants dans l'espace de réception correspondant ;
- les parois transversales externes du capot comprennent chacune au moins une portion sécable à une extrémité longitudinale de ladite paroi transversale externe, ladite au moins une portion sécable étant apte à être découpée pour former un passage, ladite au moins une portion sécable étant délimitée par au moins une prédécoupe ménagée dans ladite paroi transversale externe ;
- au moins deux nervures de la pluralité de nervures sont séparées par un espace de câblage destiné à recevoir des câbles électriques de l'ensemble électrochimique, au moins un câble électrique de l'ensemble électrochimique s'étendant dans l'espace de câblage ;
- les nervures de la pluralité de nervures comprennent une pluralité d'ergots aptes à maintenir des câbles électriques de l'ensemble électrochimique dans l'espace de câblage correspondant ;
- les nervures de la pluralité de nervures comprennent des ouvertures formant des passages de câblage pour des câbles électriques de l'ensemble électrochimique, au moins un câble électrique de l'ensemble électrochimique s'étendant dans un passage de câblage ;
- le capot est réalisé en matériau composite, par exemple un matériau composite comprenant un plastique et des fibres ;
- les éléments électrochimiques sont de type prismatique ;
- chacune des parois transversales de l'ensemble électrochimique comprend une portion principale s'étendant sensiblement parallèlement au plan sagittal médian et une portion auxiliaire,
   la portion auxiliaire comportant une partie horizontale s'étendant depuis un bord inférieur de la portion principale en direction du plan sagittal médian sensiblement parallèlement au plan horizontal,
   la pluralité d'éléments électrochimiques reposant sur les parties horizontales des portions auxiliaires des parois transversales de l'ensemble électrochimique ;
- la portion auxiliaire comporte des parties verticales s'étendant depuis des extrémités longitudinales de la partie horizontale, la pluralité d'éléments électrochimiques étant en appui sur les parties verticales des portions auxiliaires des parois transversales de l'ensemble électrochimique ;
- l'ensemble électrochimique comprend une couche de matériau thermiquement conducteur appliquée sous la pluralité d'éléments électrochimiques entre les portions auxiliaires des parois transversales de l'ensemble électrochimique ;
- l'épaisseur de la couche de matériau thermiquement conducteur est sensiblement égale à l'épaisseur des parties horizontales des portions auxiliaires des parois transversales de l'ensemble électrochimique.

L'invention concerne en outre une batterie comprenant au moins un ensemble électrochimique tel que décrit ci-dessus.

L'invention apparaîtra plus clairement à la lecture de la description qui va suivre, donnée uniquement à titre d'exemple non limitatif, et faite en référence aux dessins dans lesquels :
[Fig. 1] - la figure 1 est une illustration schématique simplifiée d'une batterie selon l'invention ;
[Fig. 2] - la figure 2 est une illustration schématique simplifiée en perspective de la batterie de la figure 1 ;
[Fig. 3] - la figure 3 est une illustration schématique simplifiée en vue de coupe de l'ensemble électrochimique de la figure 2, selon un plan de coupe III-III ;
[Fig. 4] - la figure 4 est une illustration schématique simplifiée en vue de coupe de l'ensemble électrochimique de la figure 2, selon un plan de coupe IV-IV ; et
[Fig. 5] - la figure 5 est une illustration schématique simplifiée en vue de côté de l'ensemble électrochimique de la figure 2, le point de vue correspondant faisant face à une paroi longitudinale de l'ensemble électrochimique.

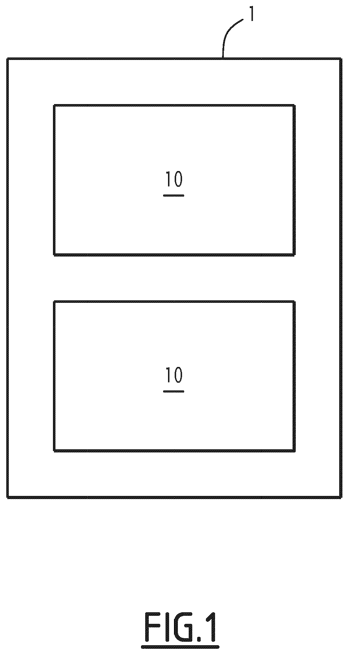

En référence aux figures 1 à 5, on décrit une batterie 1 selon l'invention.

La batterie 1 comprend au moins un ensemble électrochimique 10, par exemple deux ensembles électrochimiques 10 comme illustré sur l'exemple de la figure 1.

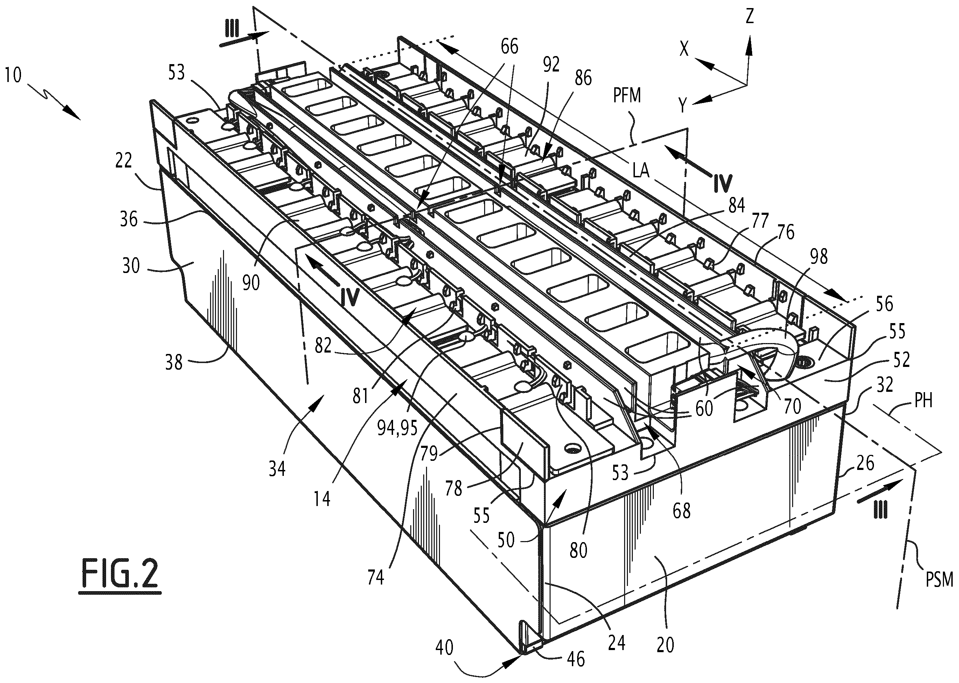

En référence aux figures 2 à 5 l'ensemble électrochimique 10 comprend une pluralité d'éléments électrochimiques 14, une première paroi longitudinale 20, une deuxième paroi longitudinale 22, une première paroi transversale 30, une deuxième paroi transversale 32 et un capot 50.

Avantageusement, en référence à la figure 2, l'ensemble électrochimique 10 comprend en outre au moins une première barre d'interconnexion 90, au moins une deuxième barre d'interconnexion 92, des premiers capteurs 94 et des deuxièmes capteurs (non-visibles).

Encore avantageusement, l'ensemble électrochimique 10 comprend en outre des câbles électriques 98.

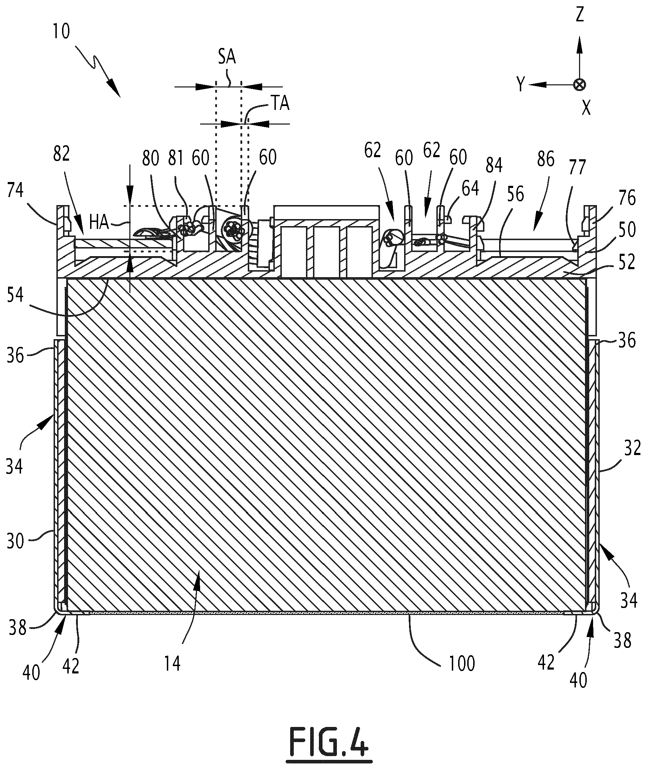

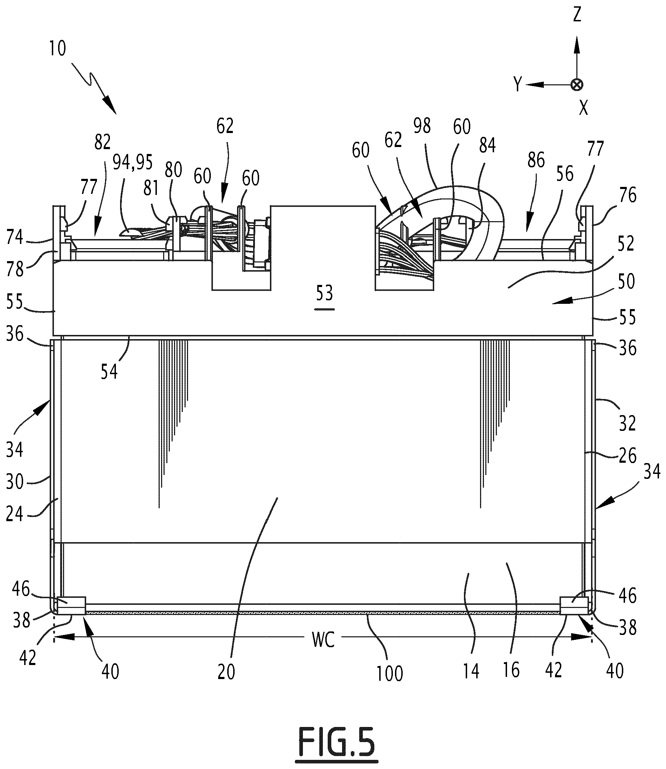

Encore avantageusement, en référence aux figures 4 et 5, l'ensemble électrochimique 10 comprend en outre une couche de matériau thermiquement conducteur 100.

Par « élément électrochimique », on entend notamment un assemblage d'électrodes, d'électrolyte, de conteneur, de bornes et généralement de séparateurs, qui est une source d'énergie électrique obtenue par transformation directe d'énergie chimique.

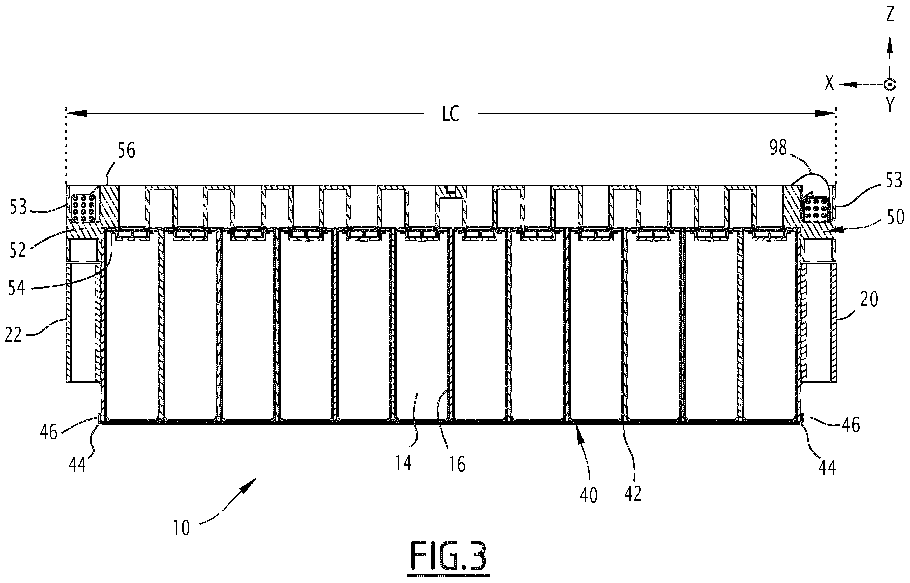

En référence à la figure 3, les éléments électrochimiques 14 sont agencés les uns à la suite des autres selon une direction longitudinale X.

Avantageusement, les éléments électrochimiques 14 sont de type prismatique. Par exemple, les éléments électrochimiques 14 sont de type rechargeables, par exemple Li-lon.

Notamment, les éléments électrochimiques 14 comprennent chacun une enveloppe externe 16 ou conteneur ayant sensiblement la forme d'un parallélépipéde rectangle. En particulier, comme illustré sur la figure 3, les éléments électrochimiques 14 sont agencés les uns contres les autres de sorte que les grandes faces des parallélépipédes rectangles correspondants soient sensiblement perpendiculaires à la direction longitudinale X et que lesdites grandes faces soient appliquées les unes contre les autres. Par « grande face », on entend une des deux faces du parallélépipéde rectangle dont la surface est supérieure à celle des autres faces du parallélépipéde rectangle.

Comme il sera décrit plus en détails ci-dessous, la pluralité d'éléments électrochimiques 14 est maintenu en position selon la direction longitudinale X par les première et deuxième parois longitudinales 20, 22, selon une direction transversale Y par les première et deuxième parois transversales 30, 32 et selon la direction d'élévation Z par le capot 50 et les parois transversales 30, 32.

En particulier, comme détaillé ci-dessous, la pluralité d'éléments électrochimiques 14 repose sur des parties horizontales 42 de portions auxiliaires 40 des parois transversales 30, 32. En outre, la pluralité d'éléments électrochimiques est avantageusement en appui sur des parties verticales 46 des portions auxiliaires 40 des parois transversales 30, 32.

En référence aux figures 2, 3 et 5, les première et deuxième parois longitudinales 20, 22 s'étendent sensiblement perpendiculairement à la direction longitudinale X et sensiblement parallélement à un plan frontal médian PFM défini par la direction transversale Y et une direction d'élévation Z perpendiculaires à la direction longitudinale X.

Les première et deuxième parois longitudinales 20, 22 sont agencées de part et d'autre de la pluralité d'éléments électrochimiques 14 selon la direction longitudinale X.

En particulier, les première et deuxième parois longitudinales 20, 22 sont en contact direct avec la pluralité d'éléments électrochimiques 14, notamment avec les éléments électrochimiques 14 des extrémités longitudinales.

En référence aux figures 2 et 5, les première et deuxième parois longitudinales 20, 22 s'étendent chacune selon la direction transversale Y entre un premier bord latéral 24 et un deuxième bord latéral 26.

En référence à l'exemple de la figure 3, les première et deuxième paroi longitudinales 20, 22 sont creuses.

Par exemple, les première et deuxième parois longitudinales 20, 22 sont réalisées en aluminium, en inox ou en matériau composite.

En référence aux figures 2, 4 et 5, les première et deuxième parois transversales 30, 32 s'étendent sensiblement parallélement à un plan sagittal médian PSM défini par la direction longitudinale X et la direction d'élévation Z.

Le première paroi transversale 30 relie le premier bord latéral 24 de la première paroi longitudinale 20 et le premier bord latéral de la deuxième paroi longitudinale 22.

En particulier, la première paroi transversale 30 est fixée au premier bord latéral 24 de la première paroi longitudinale 20 et au premier bord latéral de la deuxième paroi longitudinale 22, notamment par soudage.

La deuxième paroi transversale 32 relie le deuxième bord latéral 26 de la première paroi longitudinale 20 et le deuxième bord latéral de la deuxième paroi longitudinale 22.

En particulier, la deuxième paroi transversale 32 est fixée au deuxième bord latéral 26 de la première paroi longitudinale 20 et au deuxième bord latéral de la deuxième paroi longitudinale 22, notamment par soudage.

Les première et deuxième parois transversales 30, 32 sont agencées de part et d'autre de la pluralité d'éléments électrochimiques 14 selon la direction transversale Y.

En particulier, les première et deuxième parois transversale 30, 32 sont en contact direct avec l'ensemble des éléments électrochimiques de la pluralité d'éléments électrochimiques 14.

Les première et deuxième parois transversales 30, 32 permettent de maintenir la pluralité d'éléments électrochimiques 14 en position selon la direction transversale Y. En outre, la fixation des parois transversales 30, 32 sur les parois longitudinales 20, 22 permet de maintenir la pluralité d'éléments électrochimiques 14 en position selon la direction longitudinale X. Les parois transversales 30, 32 travaillent notamment en traction pour maintenir en position les parois longitudinales 20, 22 selon la direction longitudinale X, ce qui permet de maintenir en position les éléments électrochimiques 14 selon la direction longitudinale X.

En référence aux figures 2 à 5, chacune des parois transversales 30, 32 comprend par exemple une portion principale 34 et une portion auxiliaire 40.

La portion principale 34 s'étend sensiblement parallélement au plan sagittal médian PSM, entre un bord supérieur 36 faisant face au capot 50 et un bord inférieur 38 opposé au bord supérieur 36.

La portion auxiliaire 40 comprend une partie horizontale 42 et des parties verticales 46.

La partie horizontale 42 s'étend depuis le bord inférieur 38 de la portion principale 34 en direction du plan sagittal médian PSM et sensiblement parallélement à un plan horizontal PH défini par les directions longitudinale X et transversale Y.

Avantageusement, comme illustré sur la figure 3, la partie horizontale 42 s'étend en outre entre deux extrémités longitudinales 44, les extrémités longitudinales 44 étant agencées de part et d'autre de la pluralité d'éléments électrochimiques 14.

En référence aux figures 2, 3 et 5, les parties verticales 46 s'étendent depuis les extrémités longitudinales 44 de la partie horizontale 42.

En référence à l'exemple de la figure 4, les première et deuxième parois transversales 30, 32 sont pleines.

Par exemple, les première et deuxième parois transversales 30, 32 sont chacune en une seule pièce.

Notamment, les première et deuxième parois transversales 30, 32 comprennent chacune une plaque formant au moins partiellement la portion principale 34 et formant la portion auxiliaire 40, notamment la partie horizontales 42 et les parties verticales 46 de la portion auxiliaire 40.

Avantageusement, les parties verticales 46 de la portion auxiliaire 40 sont des nervures s'étendant aux extrémités longitudinales 44 de la partie horizontale 42 en direction du capot 50.

Par exemple, les première et deuxième parois transversales 30, 32 sont réalisées en aluminium, en inox ou en matériau composite..

Le capot 50 s'étend sensiblement parallélement au plan horizontal PH.

Le capot 50 bloque le déplacement de la pluralité d'élément électrochimiques selon la direction d'élévation Z dans un sens.

Par exemple, le capot 50 est monté sur les première et deuxième parois longitudinales 20, 22. Notamment, le capot 50 est indexé et vissé sur les première et deuxième parois longitudinales 20, 22 avec une structure d'accueil de l'ensemble électrochimique.

Le capot 50 comprend une paroi principale 52 et une pluralité de nervures 60.

Avantageusement, le capot 50 comprend en outre des première et deuxième parois transversales externes 74, 76.

Encore avantageusement, le capot 50 comprend en outre des première et deuxième parois transversales internes 80, 84.

Le capot 50 est réalisé en une seule pièce.

Avantageusement, le capot 50 est réalisé en un matériau composite, par exemple un matériau composite comprenant un plastique, notamment un thermoplastique ou un thermodurcissable, et des fibres. Selon un exemple particulier, le matériau composite est du polyamide 66 chargé de fibres, notamment de fibres de verres, préférentiellement du polyamide 66 chargé à au moins 15% de fibres de verre en masse. En variante, le capot 50 est réalisé en un matériau plastique, notamment un thermoplastique ou un thermodurcissable sans ajout de fibres.

Notamment, le matériau composite présente un module d'élasticité supérieur ou égal à 3 300 MPa, une contrainte à la rupture supérieure ou égale à 80 MPa et une déformation à la rupture supérieure ou égale à 13% (mesurés selon la norme ISO 527-1/-2.

En particulier, le matériau composite ou le matériau plastique dans la variante où le capot 50 est réalisé en un matériau plastique, présente une résistivité électrique transversale comprise entre 1x10⁶ ohm.m et 1x10¹³ ohm.m. Par exemple, le matériau composite ou le matériau plastique dans la variante où le capot 50 est réalisé en un matériau plastique, présente une rigidité diélectrique supérieure ou égale à 34 kV/mm, notamment comprise entre 34 kV/mm et 40 kV/mm. Ainsi, l'isolation électrique fournie par le capot 50 est améliorée.

La paroi principale 52 s'étend sensiblement parallèlement au plan horizontal PH

Comme illustré sur les figures 3 et 4, la paroi principale 52 comprend une surface interne 54 en contact direct avec la pluralité d'éléments électrochimiques 14 et une surface externe 56 opposée à la surface interne 54.

La paroi principale 52 s'étend entre deux bords longitudinaux 53 selon la direction longitudinale X et entre deux bords latéraux 55 selon la direction transversale Y.

La paroi principale 52 présente une longueur LC mesurée selon la direction longitudinale X entre les deux bords longitudinaux 53, comprise par exemple entre 122 mm et 610 mm.

Avantageusement, la longueur LC correspond à celle de 4 à 20 éléments électrochimiques 14 agencés les uns à la suite des autres.

La paroi principale 52 présente une largeur WC mesurée selon la direction transversale Y entre les deux bords latéraux 55, comprise entre 155 mm et 310 mm.

Avantageusement, la largeur WC correspond à celle de 1 à 2 rangées d'éléments électrochimiques 14.

La pluralité de nervures 60 s'étend depuis la surface externe de la paroi principale 52 du capot 50, sensiblement parallèlement au plan sagittal médian PSM.

Par exemple, les nervures 60 s'étendent chacune sur une longueur LA selon la direction longitudinale X comprise entre 70% et 95% de la longueur LC de la paroi principale 52 du capot 50.

Notamment, les nervures 60 présentent chacune une épaisseur TA mesurée selon la direction transversale Y par exemple comprise entre 1 mm et 3 mm, préférentiellement sensiblement égale à 2 mm.

En particulier, les nervures 60 présentent chacune une hauteur HA mesurée selon la direction d'élévation Z à partir de la surface externe 56 de la paroi principale 52 du capot 50 comprise entre 10 mm et 20 mm.

Avantageusement, en référence aux figures 2, 4 et 5, au moins deux nervures 60 de la pluralité de nervures 60 sont séparées par un espace de câblage 62 destiné à recevoir des câbles électriques 98.

Encore avantageusement, en référence à la figure 4, les nervures 60 comprennent une pluralité d'ergots 64 aptes à maintenir les câbles électriques 98 dans l'espace de câblage 62 correspondant.

Encore avantageusement, en référence à la figure 2, les nervures 60 comprennent des ouvertures 66 formant des passages de câblage pour les câbles électriques 98.

En référence à l'exemple des figures 2, 4 et 5, un premier groupe 68 de nervures 60 et un deuxième groupe 70 de nervures 60 sont agencées symétriquement de part et d'autre du plan sagittal médian PSM.

Par exemple, le premier groupe 68 de nervures 60 est agencé entre la première paroi transversale interne 80 du capot 50 et le plan sagittal médian PSM et le deuxième groupe 70 de nervures 60 est agencé entre la deuxième paroi transversale interne 84 du capot 50 et le plan sagittal médian PSM.

En particulier, les premier et deuxième groupes 68, 70 comprennent chacun au moins deux nervures 60, notamment exactement deux nervures.

Par exemple, les au moins deux nervures 60 de chaque groupe 68, 70 sont séparées par une distance SA mesurée selon la direction transversale Y comprise entre 6 mm et 9 mm, par exemple sensiblement égale à 7 mm.

Les première et deuxième parois transversales externes 74, 76 du capot 50 s'étendent depuis la surface externe 56 de la paroi principale 52 du capot 50.

Avantageusement, comme illustré sur les figures 2, 4 et 5, la première paroi transversale externe 74 du capot 50 s'étend dans le prolongement de la première paroi transversale 30 de l'ensemble électrochimique 10 et la deuxième paroi transversale externe 76 du capot 50 s'étendant dans le prolongement de la deuxième paroi transversale 32 de l'ensemble électrochimique 10.

Avantageusement, en référence à la figure 2, les parois transversales externes 74, 76 du capot 50 comprennent une pluralité d'ergots 77 aptes à maintenir l'au moins une barre d'interconnexion 90, 92 correspondante et/ou les premiers/deuxièmes capteurs 94 correspondant dans un espace de réception 82, 86 correspondant. En particulier, la pluralité d'ergots 77 sont aptes à maintenir des organes 95 de prises de mesure des premiers capteurs 94 et/ou deuxième capteurs.

Encore avantageusement, toujours en référence à la figure 2, les parois transversales externes 74, 76 du capot 50 comprennent chacune au moins une portion sécable 78 à une extrémité longitudinale de ladite paroi transversale externe 74, 76. Par exemple, chaque paroi transversale externe 74, 76 comprend deux portions sécables 78 à respectivement chacune des extrémités longitudinales de ladite paroi transversale externe 74, 76.

En particulier, l'au moins une portion sécable 78 est apte à être découpée pour former un passage destinée notamment au passage de câbles électriques 98. Notamment, l'au moins une portion sécable 78 est délimitée par au moins une prédécoupe 79 ménagée dans ladite paroi transversale externe 74, 76.

La première paroi transversale interne 80 du capot 50 s'étend depuis la surface externe 56 de la paroi principale 52 du capot 50 sensiblement parallèlement à la première paroi transversale externe 74 du capot 50.

La première paroi transversale interne 80 et la première paroi transversale externe 74 du capot 50 délimitent entre eux un premier espace 82 de réception d'au moins une première barre d'interconnexion 90 et/ou de premiers capteurs 94 de l'ensemble électrochimique 10. En particulier, le premier espace 82 est un espace de réception des organes 95 de prises de mesure des premiers capteurs 94.

Par exemple, en référence à la figure 2, la première paroi transversale interne 80 du capot 50 comprend une pluralité d'ergots 81 aptes à maintenir l'au moins une première barre d'interconnexion 90 dans le premier espace de réception 82.

La deuxième paroi transversale interne 84 du capot 50 s'étend depuis la surface externe 56 de la paroi principale 52 du capot 50 sensiblement parallèlement à la deuxième paroi transversale externe 76 du capot 50.

La deuxième paroi transversale interne 84 et la deuxième paroi transversale externe 76 du capot 50 délimitent entre eux un deuxième espace 86 de réception d'au moins une deuxième barre d'interconnexion 92 et/ou de deuxièmes capteurs de l'ensemble électrochimique 10. En particulier, le deuxième espace 86 est un espace de réception des organes de prise de mesure des deuxièmes capteurs.

Par exemple, la deuxième paroi transversale interne 84 du capot 50 comprend une pluralité d'ergots aptes à maintenir l'au moins une deuxième barre d'interconnexion 92 dans le deuxième espace de réception 86.

L'au moins une première barre d'interconnexion 90 est connectée électriquement à une pluralité d'éléments électrochimiques 14, notamment à des bornes d'une première polarité des éléments électrochimiques 14. L'au moins une première barre d'interconnexion est notamment maintenu dans le premier espace de réception 82 par les ergots 77 et 81 correspondants.

L'au moins une deuxième barre d'interconnexion 92 est connectée électriquement à une pluralité d'éléments électrochimiques 14, notamment à des bornes d'une deuxième polarité opposée à la première polarité, des éléments électrochimiques 14. L'au moins une deuxième barre d'interconnexion est notamment maintenu dans le deuxième espace de réception 86 par les ergots 77, 81 correspondants.

Les premier capteurs 94 sont configurés pour mesurer des paramètres relatifs aux éléments électrochimiques 14, notamment une tension aux bornes des éléments électrochimiques 14 ou une température des éléments électrochimiques, en particulier par les organes 95 de prise de mesure. Les premiers capteurs 94 sont notamment montés sur l'au moins une première barre d'interconnexion 90 dans le premier espace de réception 82.

Les deuxièmes capteurs sont configurés pour mesurer des paramètres relatifs aux éléments électrochimiques 14, notamment une tension aux bornes des éléments électrochimiques ou une température des éléments électrochimiques 14, en particulier par les organes de prise de mesure. Les deuxièmes capteurs sont notamment montés sur l'au moins une deuxième barre d'interconnexion 92 dans le deuxième espace de réception 86.

Les câbles électriques 98 sont destinés à connecter les capteurs 94 à un système de gestion de batterie (non-illustré) et/ou à connecter les barres d'interconnexion 90, 92 à des connecteurs électriques (non-illustrés).

Par exemple, en référence à la figure 2, au moins un câble électrique 98 s'étend dans un espace de câblage 62.

Par exemple, au moins un câble électrique 98 s'étend dans un passage de câblage d'une ouverture 66 de nervure 60.

La couche 100 de matériau thermiquement conducteur est appliquée sous la pluralité d'éléments électrochimique 14.

En particulier, en référence aux figures 4 et 5, la couche 100 est appliquée entre les portions auxiliaires 40 des parois transversales 30, 32 de l'ensemble électrochimique 10, notamment entre les parties horizontales 42 correspondantes.

Notamment, l'épaisseur de la couche 100 est sensiblement égale à l'épaisseur des parties horizontales 42 des portions auxiliaires 40 des parois transversales 30, 32 de l'ensemble électrochimique 10.

Grâce à l'invention, l'ensemble électrochimique est simplifié et son assemblage est plus facile puisque le capot est réalisé en une seule pièce. En outre, l'invention permet d'éviter d'avoir recours à un organe spécifique pour le maintien des éléments électrochimiques selon la direction d'élévation. Egalement, l'inertie sous flexion du capot lors d'une sollicitation du capot selon la direction d'élévation est améliorée par la présence des nervures du capot.

## Revendications

1. Ensemble électrochimique (10) comprenant :
- une pluralité d'éléments électrochimiques (14) agencés les uns à la suite des autres selon une direction longitudinale (X) ;
- une première et une deuxième parois longitudinales (20, 22) s'étendant sensiblement perpendiculairement à la direction longitudinale (X) et sensiblement parallèlement à un plan frontal médian (PFM) défini par une direction transversale (Y) et une direction d'élévation (Z) perpendiculaires à la direction longitudinale (X), les première et deuxième parois longitudinales (20, 22) étant agencées de part et d'autre de la pluralité d'élément électrochimiques (14) selon la direction longitudinale (X) ;
- une première et une deuxième parois transversales (30, 32) s'étendant sensiblement parallèlement à un plan sagittal médian (PSM) défini par la direction longitudinale (X) et la direction d'élévation (Z), la première paroi transversale (30) reliant un premier bord latéral (24) de la première paroi longitudinale (20) et un premier bord latéral (24) de la deuxième paroi longitudinale (22), la deuxième paroi transversale (32) reliant un deuxième bord latéral (26) de la première paroi longitudinale (20) et un deuxième bord latéral (26) de la deuxième paroi longitudinale (22) ;
- un capot (50) s'étendant sensiblement parallèlement à un plan horizontal (PH) défini par la direction longitudinale (X) et la direction transversale (Y) ;
la pluralité d'éléments électrochimiques (14) étant maintenue en position selon la direction longitudinale (X) par les première et deuxième parois longitudinales (20, 22) et selon la direction transversale (Y) par les première et deuxième parois transversales (30, 32),
le capot (50) étant réalisé en une seule pièce et bloquant le déplacement de la pluralité d'éléments électrochimiques (14) selon la direction d'élévation (Z) dans un sens,
le capot (50) comprenant :
- une paroi principale (52) s'étendant sensiblement parallèlement au plan horizontal (PH), comprenant une surface interne (54) en contact direct avec la pluralité d'éléments électrochimique (14) et une surface externe (56) opposée à la surface interne (54) ; et
- une pluralité de nervures (60) s'étendant depuis la surface externe (56) de la paroi principale (52), sensiblement parallèlement au plan sagittal médian (PSM).

2. Ensemble électrochimique (10) selon la revendication 1, dans lequel le capot (50) est monté sur les première et deuxième parois longitudinales (20, 22).

3. Ensemble électrochimique (10) selon la revendication 1 ou 2, dans lequel le capot (50) comprend une première et une deuxième parois transversales externes (74, 76) s'étendant depuis la surface externe (56) de la paroi principale (52) du capot (50), la première paroi transversale externe (74) du capot (50) s'étendant dans le prolongement de la première paroi transversale (30) de l'ensemble électrochimique (10), la deuxième paroi transversale externe (76) du capot (50) s'étendant dans le prolongement de la deuxième paroi transversale (32) de l'ensemble électrochimique (10).

4. Ensemble électrochimique (10) selon la revendication 3, dans lequel le capot (50) comprend en outre une première paroi transversale interne (80) s'étendant depuis la surface externe (56) de la paroi principale (52) du capot (50) sensiblement parallèlement à la première paroi transversale externe (74) du capot (50) et une deuxième paroi transversale interne (84) s'étendant depuis la surface externe (56) de la paroi principale (52) du capot (50) sensiblement parallèlement à la deuxième paroi transversale externe (76) du capot (50),
la première paroi transversale externe (74) et la première paroi transversale interne (80) du capot (50) délimitant un première espace (82) de réception d'au moins une première barre d'interconnexion (90) et/ou de premiers capteurs (94) de l'ensemble électrochimique (10), la deuxième paroi transversale externe (76) et la deuxième paroi transversale interne (84) du capot (50) délimitant un deuxième espace (86) de réception d'au moins une deuxième barre d'interconnexion (92) et/ou de deuxième capteurs de l'ensemble électrochimique (10).

5. Ensemble électrochimique (10) selon la revendication 4, dans lequel les parois transversales externes (74, 76) du capot (50) comprennent une pluralité d'ergots (77) apte à maintenir la barre d'interconnexion (90, 92) correspondante et/ou les capteurs (94) correspondants dans l'espace de réception (82, 86) correspondant.

6. Ensemble électrochimique (10) selon l'une quelconque des revendications 3 à 5, dans lequel les parois transversales externes (74, 76) du capot (50) comprennent chacune au moins une portion sécable (78) à une extrémité longitudinale de ladite paroi transversale externe (74, 76), ladite au moins une portion sécable (78) étant apte à être découpée pour former un passage, ladite au moins une portion sécable (78) étant délimitée par au moins une prédécoupe (79) ménagée dans ladite paroi transversale externe (74, 76).

7. Ensemble électrochimique (10) selon l'une quelconque des revendications précédentes, dans lequel au moins deux nervures (60) de la pluralité de nervures (60) sont séparées par un espace de câblage (62) destiné à recevoir des câbles électriques (98) de l'ensemble électrochimique (10), au moins un câble électrique (98) de l'ensemble électrochimique (10) s'étendant dans l'espace de câblage (62).

8. Ensemble électrochimique (10) selon la revendication 7, dans lequel les nervures (60) de la pluralité de nervures (60) comprennent une pluralité d'ergots (64) aptes à maintenir des câbles électriques (98) de l'ensemble électrochimique (10) dans l'espace de câblage correspondant (62).

9. Ensemble électrochimique (10) selon la revendication 7 ou 8, dans lequel les nervures (60) de la pluralité de nervures (60) comprennent des ouvertures (66) formant des passages de câblage pour des câbles électriques (98) de l'ensemble électrochimique (10), au moins un câble électrique (98) de l'ensemble électrochimique (10) s'étendant dans un passage de câblage.

10. Ensemble électrochimique (10) selon l'une quelconque des revendications précédentes, dans lequel le capot (50) est réalisé en matériau composite, par exemple un matériau composite comprenant un plastique et des fibres.

11. Ensemble électrochimique (10) selon l'une quelconque des revendications précédentes, dans lequel les éléments électrochimiques (14) sont de type prismatique.

12. Ensemble électrochimique (10) selon l'une quelconque des revendications précédentes, dans lequel chacune des parois transversales (30, 32) de l'ensemble électrochimique (10) comprend une portion principale (34) s'étendant sensiblement parallèlement au plan sagittal médian (PSM) et une portion auxiliaire (40),
la portion auxiliaire (40) comportant une partie horizontale (42) s'étendant depuis un bord inférieur (38) de la portion principale (34) en direction du plan sagittal médian (PSM) sensiblement parallèlement au plan horizontal (PH),
la pluralité d'éléments électrochimiques (14) reposant sur les parties horizontales (42) des portions auxiliaires (40) des parois transversales (30, 32) de l'ensemble électrochimique (10).

13. Ensemble électrochimique (10) selon la revendication 12, dans lequel la portion auxiliaire (40) comporte des parties verticales (46) s'étendant depuis des extrémités longitudinales (44) de la partie horizontale (42), la pluralité d'éléments électrochimiques (14) étant en appui sur les parties verticales (46) des portions auxiliaires (40) des parois transversales (30, 32) de l'ensemble électrochimique (10).

14. Ensemble électrochimique (10) selon la revendication 12 ou 13, dans lequel l'ensemble électrochimique (10) comprend une couche (100) de matériau thermiquement conducteur appliquée sous la pluralité d'éléments électrochimiques (14) entre les portions auxiliaires (40) des parois transversales (30, 32) de l'ensemble électrochimique (10).

15. Ensemble électrochimique (10) selon la revendication 14, dans lequel l'épaisseur de la couche (100) de matériau thermiquement conducteur est sensiblement égale à l'épaisseur des parties horizontales (42) des portions auxiliaires (40) des parois transversales (30, 32) de l'ensemble électrochimique (10).

16. Batterie (1) comprenant au moins un ensemble électrochimique (10) selon l'une quelconque des revendications précédentes.
